# EUROPÄISCHE PATENTSCHRIFT

(11) **EP 0 945 665 B1**
(45) Veröffentlichungstag und Bekanntmachung des Hinweises auf die Patenterteilung: **06.06.2001**
(21) Anmeldenummer: 98105381.2
(22) Anmeldetag: 25.03.1998
(51) Int. Cl.: F16L 47/06, F16L 37/02, F16L 58/18

(54) **Rohr, insbesondere Wickelrohr**
Tube, in particular wrapped tube
Tuyau, notamment tuyau enroulé

(43) Veröffentlichungstag der Anmeldung: 29.09.1999
(73) Patentinhaber: Bauku Troisdorfer Bau- und Kunststoffgesellschaft mbH, 51674 Wiehl (DE)
(72) Erfinder: Hawerkamp, Marcus, 53844 Troisdorf (DE)
(74) Vertreter: Honke, Manfred, Dr.-Ing.

(56) Entgegenhaltungen:
- GB-A- 908 127
- US-A- 5 364 130

## Beschreibung

Die Erfindung betrifft ein Rohr, insbesondere Wickelrohr, aus zwei oder mehreren Rohrschüssen aus thermoplastischem Kunststoff, wobei jeder Rohrschuß endseitig einerseits ein Einsteckende und andererseits eine Steckmuffe aufweist, und wobei die Rohrschüsse zweischalig mit einer Trennschichtlage zwischen einer Grundlage und einer Decklage ausgebildet sind.

Bei den verwendeten Thermoplasten handelt es sich üblicherweise um Polyethylen (PE). Selbstverständlich ist generell auch die Verwendung von Polycarbonat (PC) Polypropylen (PP), Polyvinylchlorid (PVC) o.ä. denkbar. Rohre aus thermoplastischem Kunststoff sind beispielsweise durch die DE-A-196 11 883 bekanntgeworden.

Ein Wickelrohr sowie dessen Herstellung wird in der DE-C-39 38 675 beschrieben.

Bei einem Rohr der eingangs beschriebenen Ausführungsform wird eine durchgängige Dreilagigkeit verfolgt. Jede Lage ist aus Glasfasern hergestellt, die untereinander adhäsiv miteinander verbunden sind. Die Ausbildung des Einsteckendes bzw. der Steckmuffe erfolgt durch Variation der Konzentration der Glasfasern, also letztlich im Wege einer Dickenveränderung der jeweiligen Schicht bzw. Lage. Auf diese Weise lassen sich auch konische Ausgestaltungen endseitig der Rohrschüsse verwirklichen.

Das vorgenannte Rohr mag zwar eine außerordentliche Stabilität und Haltbarkeit aufweisen, ermöglicht jedoch praktisch nur eine herstellerseitige Definition der Länge der Rohrschüsse wie des Einsteckendes und der Steckmuffe. Mit anderen Worten handelt es sich vorliegend um ein Fertigprodukt, welches kaum nachbearbeitet werden kann, insbesondere eine einfache und problemlose Anpassung an unterschiedliche Gegebenheiten auf einer Baustelle nicht zuläßt (vgl. GB-A-908 127).

Darüber hinaus ist es bekannt, ein Rohr gleichsam zweischalig auszuführen, indem eine starre, relativ dünne äußere Rohrschale mit einer weichen, relativ dünnen inneren Rohrschale verbunden wird. Eine druckdichte Kopplung zweier solchermaßen ausgeführter Rohrschüsse erfolgt über eine Kupplungsmuffe, mit deren Hilfe die jeweils zu verbindenden Rohrenden verschweißt werden (vgl. US-A-5 364 130).

Im übrigen ergibt sich insbesondere bei Wickelrohren ein Problem dahingehend, daß das Einsteckende von seinem Außendurchmesser her im allgemeinen nicht an den Innendurchmesser der Steckmuffe angepaßt ist. Diese Tatsache erklärt sich größtenteils daraus, daß derartige Rohre - wie beispielsweise in der DE-C 39 38 675 beschrieben - üblicherweise auf einem Wickeldorn mit gleichbleibendem Durchmesser durch Wickeln von Bandmaterial mit regelmäßig rechteckigem Querschnitt hergestellt werden. Jedenfalls ist entweder eine nachträgliche Anpassung des Innendurchmessers der Steckmuffe an den unveränderten Außendurchmesser des Einsteckendes oder eine umgekehrte Vorgehensweise erforderlich. Man kann natürlich auch mit entsprechend geformten Wickeldornen arbeiten, ist dann jedoch an hierdurch vorgegebene Längenabmessungen der entstehenden Rohrschüsse gebunden.

Probleme bei den bekannten Vorgehensweisen stellen sich besonders dann ein, wenn einzelne Rohrschüsse vor Ort, d.h. beispielsweise bei der Herstellung von Entwässerungsrohren bzw. -kanälen abgelängt werden müssen. D.h., in diesem Fall lassen sich produktionsseitige Anpassungen von Steckmuffe und Einsteckende nicht verwirklichen, weil das Einsteckende letztlich erst an der Baustelle realisiert wird. Früher hat man versucht, diesem Problem dadurch zu begegnen, daß je nach den örtlichen Gegebenheiten ein Rohrschuß kurzfristig auf Maß gefertigt wurde. Eine solche Vorgehensweise ist produktions- und kostenmäßig unbefriedigend. Auch werden hierdurch der Einsatz und die Verwendung von Rohrschüssen geographisch eingeschränkt, weil beispielsweise ein längerer Transport des speziell hergestellten und angepaßten Rohrschusses nicht zu akzeptieren ist. - Hier setzt die Erfindung ein.

Der Erfindung liegt die Aufgabe zugrunde, ein Rohr, insbesondere Wickelrohr der eingangs beschriebenen Ausführungsform so weiterzubilden, daß eine problemlose Anpassung von Steckmuffe und Einsteckende vor Ort, d.h. direkt an der Baustelle, erfolgen kann.

Zur Lösung dieser Aufgabe schlägt die Erfindung bei einem Rohr, insbesondere Wickelrohr, der eingangs beschriebenen Ausführungsform vor, daß die Trennschichtlage aus einem sich mit der Decklage nicht adhäsiv verbindenden Material besteht, wobei die Decklage zumindest im Bereich eines einsteckendseitigen Aufsteckbereiches von der übrigen Decklage abtrennbar ist. Eine Adäsionsverbindung der Trennschichtlage mit der Grundlage wird dagegen nach Lehre der Erfindung zugelassen, weil es lediglich darauf ankommt, zumindest das einsteckendseitige Ende der Decklage - den Aufsteckbereich - von der Decklage abtrennen zu können. Selbstverständlich kann die Trennschichtlage auch aus einem Material gefertigt sein, welches sich weder mit der Decklage noch der Grundlage adhäsiv verbindet. Hier bieten sich handelsübliche Bänder oder Folien an. Tatsächlich kann als Trennschichtlage herkömmliches Krepp-Papier bzw. Papier von der Rolle eingesetzt werden. Dieses läßt sich beispielsweise auf eine Grundlage (aus PE) kleben und anschließend mit einer Decklage (ebenfalls aus PE) überdecken oder überwickeln. Jedenfalls können übliche Materialien eingesetzt werden, die sich mit der Decklage und/oder der Grundlage nicht adhäsiv verbinden und getrennt von einem etwaigen Rohrwickel zugeführt werden können.

Im Falle der Herstellung eines Wickelrohres kann man mit jeweils rechteckförmigem Wickelband arbeiten, welches aus unterschiedlichen Kunststoffen gefertigt ist, die die vorstehende Bedingung erfüllen. In der Regel bestehen Grundlage und Decklage aus Polyethylen (PE), während die Trennschichtlage aus einer Wickelfolie aus Celluloseacetat (CA) oder eben aus von einer Rolle abgewickeltem (Krepp-)Papier hergestellt sein kann. Ja sogar Metallfolien sind als Trennschichtlage denkbar, wenn eine zusätzliche elektromagnetische Abschirmung und/oder Erdung des Rohres in Frage kommt oder besondere Stabilität erreicht werden soll. Üblicherweise greift man jedoch neben Papier auf Naturfasern, z.B. Leinen, Baumwolle oder auch Polypropylen (PP) als Material für die Trennschichtlage zurück.

Im allgemeinen weist die Steckmuffe einen an den Außendurchmesser der Trennschichtlage angepaßten Innendurchmesser auf, wobei die Steckmuffe eine umlaufende Ringwulst mit einem Außendurchmesser besitzt, welcher größer als der Außendurchmesser der Decklage ausgebildet ist. Üblicherweise sind die Grundlage und die Decklage aus gleichem Material (beispielsweise Polyethylen (PE)) mit gleicher Wandstärke (z.B. 15 mm) gefertigt. Um Steckmuffe und Einsteckende aneinander anpassen zu können, weist die Steckmuffe regelmäßig einen Einsteckbereich vorgegebener Länge auf, wobei der Aufsteckbereich am Einsteckende mit gleicher Länge definierbar ist. Dieser Aufsteckbereich am Einsteckende wird im allgemeinen im Zuge eines in die Decklage einzubringen Umfangschnittes bis zur Trennschichtlage erzeugt, wobei der Umfangschnitt in einem der Länge des Aufsteckbereiches entsprechenden Abstand vom Rohrende vorgenommen wird, und wobei ein sich durch den Umfangschnitt bildender Decklagenring der zuvor angegebenen Länge von der Trennschichtlage und damit dem Einsteckende abgezogen wird. Endlich wird hauptsächlich so vorgegangen, daß die Steckmuffe aus der Grundlage geformt ist, und daß die Decklage auf die Grundlage aufgebracht ist, wobei das steckmuffenseitige Ende der Decklage an die vorkragende Steckmuffe stößt.

Durch diese Maßnahmen der Erfindung wird zunächst einmal eine problemlose gegenseitige Anpassung von Steckmuffe und Einsteckende aneinander erreicht, und zwar unabhängig von der Länge des jeweiligen Rohrschusses. Folglich kann eine derartige Adaption auch vor Ort, d.h. direkt an der Baustelle, erfolgen. Die Anfertigung eines speziellen Rohrschusses ist nicht mehr erforderlich. Es reicht vielmehr aus, den gewünschten Rohrschuß einsteckendseitig abzulängen und im Anschluß hieran den Einsteckbereich zu definieren. Dies geschieht letztlich dadurch, daß das einsteckendseitige Ende der Decklage - der Aufsteckbereich vorgegebener Länge - von der Decklage abgetrennt wird, in dem zuvor in die Decklage ein Umfangsschnitt bis zur Trennschichtlage eingebracht und der sich hierdurch bildende Decklagenring der gewünschten Länge von der Trennschicht und damit dem Einsteckende abgezogen wird. Dies gelingt einfach und problemlos deshalb, weil die Decklage mit der Trennschichtlage zumindest im Aufsteckbereich nicht adhäsiv verbunden ist, folglich zwischen Decklage und Trennschichtlage keine irgendwie geartete Haftwirkung durch elektrostatische Kräfte, durch van-der-Waals-Kräfte oder gar durch eine echte chemische Bindung zu verzeichnen ist. Demgegenüber kann natürlich eine Verbindung zwischen Grundlage und Trennschichtlage zugelassen werden, obwohl dies meistens schon deshalb nicht der Fall ist, weil Decklage und Grundlage aus dem gleichen Material mit gleicher Wandstärke gefertigt sind, folglich üblicherweise auch keine Adhäsivkräfte zwischen Grundlage und Trennschichtlage wirken.

Dadurch, daß die Steckmuffe einen an den Außendurchmesser der Trennschichtlage und folglich an den Innendurchmesser der Decklage und damit an den Innendurchmesser des Decklagenringes angepaßten Innendurchmesser besitzt, läßt sich das Einsteckende mit dem Aufsteckbereich eines Rohrschusses problemlos in die Steckmuffe mit dem Einsteckbereich eines anderen Rohrschusses einschieben. Dabei bildet die Steckmuffe aufgrund ihrer umlaufenden Ringwulst gleichsam einen Anschlag, da diese Ringwulst einen Außendurchmesser aufweist, welcher größer als der Außendurchmesser der Decklage ausgebildet ist. Wenn nun noch die jeweilige Länge des Einsteckbereiches und des Aufsteckbereiches aneinander angepaßt sind, wird gleichzeitig erreicht, daß das Einsteckende auch innenseitig an einen Anschlag in der Steckmuffe stößt, so daß in Verbindung mit üblichen Gummidichtungen eine bestmögliche Dichtigkeit erreicht wird. Hierin sind die wesentlichen Vorteile der Erfindung zu sehen.

Im folgenden wird die Erfindung anhand einer lediglich ein Ausführungsbeispiel darstellenden Zeichnung näher erläutert; es zeigen
- Fig. 1: eine Seitenansicht eines erfindungsgemäßen Rohres, teilweise im Schnitt, und
- Fig. 2: einen vergrößerten Ausschnitt aus Fig. 1.

In den Figuren ist ein Rohr, insbesondere Wickelrohr, aus zwei oder mehreren Rohrschüssen 1, 2 aus thermoplastischem Kunststoff gezeigt. Jeder Rohrschuß 1, 2 weist endseitig einerseits ein Einsteckende 3 und andererseits eine Steckmuffe 4 auf. Nach dem Ausführungsbeispiel sind die Rohrschüsse 1,2 zweischalig mit einer Trennschichtlage 5 zwischen einer Grundlage 6 und einer Decklage 7 ausgebildet, wobei die Decklage 7 zumindest im Bereich eines einsteckendseitigen Aufsteckbereiches A von der übrigen Decklage 7 abtrennbar ist, wie im folgenden im Detail noch erläutert wird.

Die Trennschichtlage 5 besteht aus einem sich mit der Decklage 7 nicht adhäsiv verbindenden Material. Hierbei kann es sich um Celluloseacetat CA oder bevorzugt (Krepp-)Papier handeln, welches als Wickelfolie vorliegen kann oder von einer (Aufwickel-)Rolle zugeführt wird. Dabei ist die Trennschichtlage 5 im allgemeinen zumindest auf der Grundlage 6 fixiert, um ein Verrutschen bei der weiteren Produktion zu vermeiden. Dennoch gelingt ein Abziehen der Trennschichtlage 5 von der Grundlage 6, wenn dies erforderlich sein sollte. Denkbar sind in diesem Zusammenhang Situationen, bei denen eine Steckverbindung mit Gummidichtring ausgeführt wird. Denn eine verbleibende Trennschichtlage 5 würde diesbezüglich die Gefahr einer Leckage erhöhen, wenn sie zwischen Gummidichtung, insbesondere Gummidichtring, und Grundlage 6 verbleiben würde (vgl. beispielsweise Trennschichtlage 5 aus (Krepp-)Papier). Folglich kommt es darauf an, einen (von Hand lösbaren) Haftverbund zwischen Grundlage 6 und Trennschichtlage 5 zu verwirklichen.

Die Grundlage 6 und die Decklage 7 sind nach dem Ausführungsbeispiel aus Bandmaterial mit rechteckförmigem Querschnitt ausgeführt, welches auf einen durchgängigen Wickeldorn aufgewickelt wird. Bei dem Bandmaterial handelt es sich um solches aus Polyethylen PE.

Die Steckmuffe 4 besitzt einen an den Außendurchmesser Tₐ der Trennschichtlage 5 angepaßten Innendurchmesser Sᵢ, d.h., es gilt Sᵢ ≈ Tₐ. Sofern die Trennschichtlage 5 wegen einer gegebenenfalls zusätzlich eingebrachten Gummidichtung an dieser Stelle entfernt wird, kann auch mit Werten Sᵢ ≤ Tₐ gearbeitet werden, obwohl Sᵢ in der Regel gleich oder größer als Tₐ sein muß (Sᵢ ≥ Tₐ). Zusätzlich weist die Steckmuffe 4 eine umlaufende Ringwulst 8 auf, die einen Außendurchmesser Wₐ besitzt, welcher größer als der Außendurchmesser Dₐ der Decklage 7 ausgebildet ist. Nach dem Ausführungsbeispiel weisen Grundlage 6 und Decklage 7 die gleiche Wandstärke s im Bereich von ca. 15 mm auf. Die Steckmuffe 4 besitzt einen Einsteckbereich E vorgegebener Länge 1, wobei am Einsteckende 3 der Aufsteckbereich A mit gleicher Länge 1 definierbar ist. Nach dem Ausführungsbeispiel beträgt die Länge 1 jeweils ca. 130 mm.

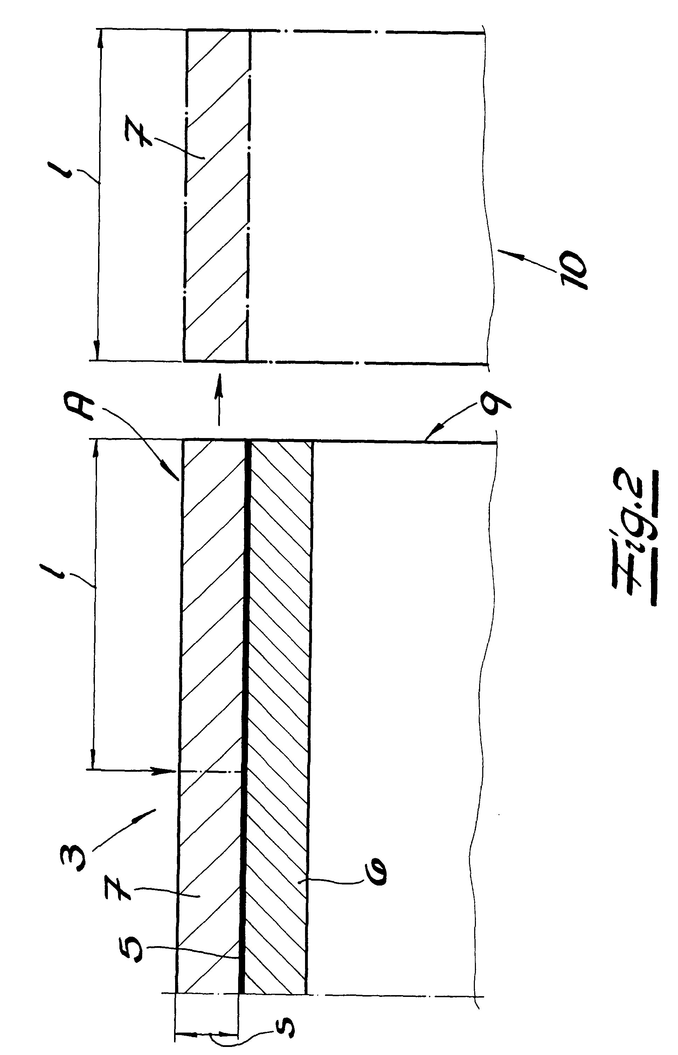

Der Aufsteckbereich A läßt sich am Einsteckende 3 im Zuge eines in die Decklage 7 einzubringenden Umfangschnittes bis zur Trennschichtlage 5 erzeugen. Dieser Umfangschnitt wird in einem der Länge 1 des Aufsteckbereiches A entsprechenden Abstand vom Rohrende 9 vorgenommen, wobei ein sich durch den Umfangschnitt bildender Decklagenring 10 der Länge 1 von der Trennschichtlage 5 und damit dem Einsteckende 3 abgezogen wird. Dieser Decklagenring 10 ist in Fig. 2 angedeutet. Hier zeigt darüber hinaus ein Pfeil, an welcher Stelle der Umfangschnitt vorgenommen wurde. Dieser läßt sich beispielsweise mittels eines rotierenden Messers einbringen, welches auf die gewünschte Schnittiefe (Wandstärke s der Decklage 7) eingestellt ist.

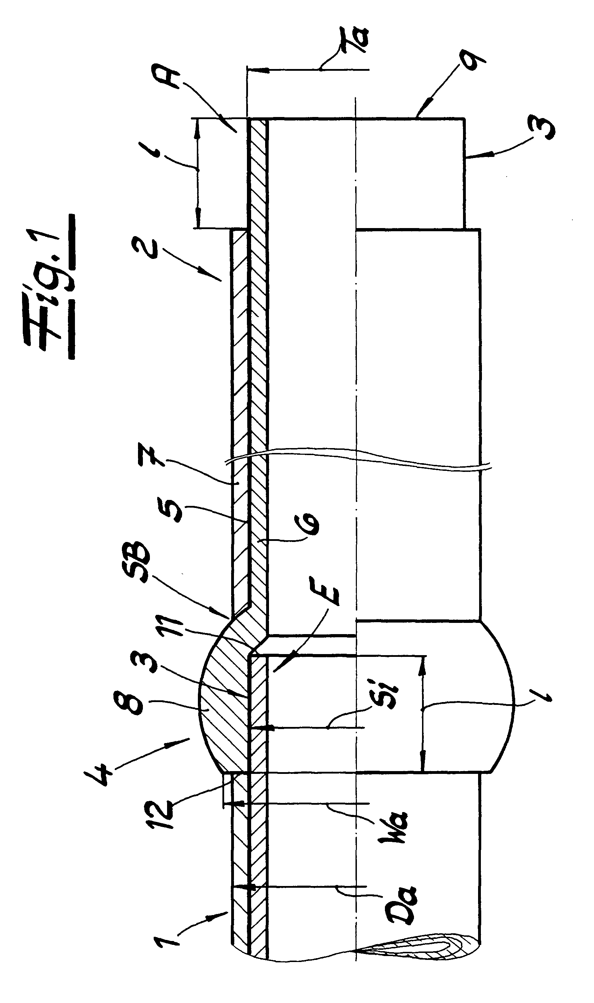

Die Steckmuffe 4 (mit der Ringwulst 8) ist aus der Grundlage 6 geformt, wobei die Decklage 7 auf die Grundlage 6 aufgebracht ist. Dabei stößt das steckmuffenseitige Ende der Decklage 7 an die vorkragende Steckmuffe 4 bzw. die Ringwulst 8 an. Dieser Stoßbereich ist in Fig. 1 zu erkennen und trägt die Bezeichnung SB. Durch die gewählten geometrischen Abmessungen läßt sich das Einsteckende 3 eines Rohrschusses 1 problemlos mit der Steckmuffe 4 eines nachfolgenden Rohrschusses 2 verbinden. Denn der Innendurchmesser Sᵢ der Steckmuffe 4 dieses nachfolgenden Rohrschusses 2 ist an den Außendurchmesser Tₐ der Trennschichtlage 5 angepaßt. Dies gilt auch für die jeweiligen Längen 1 von Einsteckbereich E und Aufsteckbereich A. Das heißt, der Aufsteckbereich A läßt sich bis zu einem Anschlag 11 in die Steckmuffe 4 einschieben. An dieser Stelle kann eine Gummidichtung umfangsseitig und/oder stoßseitig verwirklicht sein. Dies gilt auch für einen Anschlag 12, welcher sich durch die längenmäßige Anpassung von Einsteckbereich E und Aufsteckbereich A gleichsam von selbst steckmuffenrandseitig der Ringwulst 8 ergibt.

Jedenfalls erlaubt das erfindungsgemäße Rohr eine problemlose Kürzung des Einsteckendes 3, wobei im Anschluß hieran der Aufsteckbereich A durch den eingebrachten Umfangschnitt und das Entfernen des sich bildenden Decklagenringes 10 definiert wird. Derartiges kann problemlos auf einer Baustelle vorgenommen werden.

## Patentansprüche

1. Rohr, insbesondere Wickelrohr, aus zwei oder mehreren Rohrschüssen (1, 2) aus thermoplastischem Kunststoff, wobei jeder Rohrschuß (1,2) endseitig einerseits ein Einsteckende (3) und andererseits eine Steckmuffe (4) aufweist, und wobei die Rohrschüsse (1, 2) zweischalig mit einer Trennschichtlage (5) zwischen einer Grundlage (6) und einer Decklage ausgebildet sind, **dadurch gekennzeichnet**, daß die Trennschichtlage (5) aus einem sich mit der Decklage (7) nicht adhäsiv verbindenden Material besteht, wobei die Decklage (7) zumindest im Bereich eines einsteckendseitigen Aufsteckbereiches (A) von der übrigen Decklage (7) abtrennbar ist.

2. Rohr nach Anspruch 1, dadurch gekennzeichnet, daß die Grundlage (6) und die Decklage (7) aus gleichem Material mit gleicher Wandstärke (s) gefertigt sind.

3. Rohr nach Anspruch 1 oder 2, dadurch gekennzeichnet, die Steckmuffe (4) einen an den Außendurchmesser (Tₐ) der Trennschichtlage (5) angepaßten Innendurchmesser (Sᵢ) aufweist.

4. Rohr nach einem der Ansprüche 1 bis 3, dadurch gekennzeichnet, daß die Steckmuffe eine Ringwulst (8) mit einem Außendurchmesser (Wₐ) aufweist, welcher größer als der Außendurchmesser (Dₐ) der Decklage (7) ausgebildet ist.

5. Rohr nach einem der Ansprüche 1 bis 4, dadurch gekennzeichnet, daß die Steckmuffe (4) einen Einsteckbereich (E) vorgegebener Länge (1) aufweist, und daß der Aufsteckbereich am Einsteckende (3) mit gleicher Länge (1) definierbar ist.

6. Rohr nach einem der Ansprüche 1 bis 5, dadurch gekennzeichnet, daß die Steckmuffe (4) aus der Grundlage (6) geformt ist, und daß die Decklage (7) auf die Grundlage (6) aufgebracht ist, wobei das steckmuffenseitige Ende der Decklage (7) an die vorkragende Steckmuffe (4) stößt.

7. Rohr nach einem der Ansprüche 1 bis 6, dadurch gekennzeichnet, daß der Aufsteckbereich (A) am Einsteckende (3) im Zuge eines in die Decklage (7) einzubringenden Umfangschnittes bis zur Tennschichtlage (5) definierbar ist, wobei der Umfangschnitt in einem der Länge (1) des Aufsteckbereiches (A) entsprechenden Abstand vom Rohrende (9) vorgenommen wird, und wobei ein sich durch den Umfangschnitt bildender Decklagenring (10) der Länge (1) von der Trennschichtlage (5) und damit dem Einsteckende (3) abziehbar ist.

## Claims

1. A pipe, particularly a rolled, laminated pipe, comprising two or more pipe lengths (1, 2) made of synthetic thermoplastic material, wherein each pipe length (1, 2) has an insertion end (3) at one end and an coupling socket (4) at its other end, and wherein the pipe lengths (1, 2) are of double-layer construction with a separating film layer (5) between a base layer (5) and an outer layer, characterised in the separating film layer (5) consists of a material which does not form an adhesive bond with the outer layer (7), wherein the outer layer (7) can be separated, at least in the region of a push-in section (A) at the insertion end, from the remaining outer layer (7).

2. A pipe according to claim 1, characterised in that the base layer (5) and the outer layer (7) are made of the same material with the same wall thickness (s).

3. A pipe according to claims 1 or 2, characterised in that the coupling socket (4) has an inside diameter (Sᵢ) which is matched to the outside diameter (Tₐ) of the separating film layer (5).

4. A pipe according to any one of claims 1 to 3, characterised in that the coupling socket has an annular collar (8) which is formed with an outside diameter (Wₐ) which is larger than the outside diameter (Dₐ) of the outer layer (7).

5. A pipe according to any one of claims 1 to 4, characterised in that the coupling socket (4) has an insertion region (E) of predetermined length (1), and that the push-in region at the insertion end (3) can be defined with the same length (1).

6. A pipe according to any one of claims 1 to 5, characterised in that the coupling socket (4) is formed from the base layer (6), and that the outer layer (7) is deposited on the base layer (6), wherein the coupling socket end of the outer layer (7) abuts against the protruding coupling socket (4).

7. A pipe according to any one of claims 1 to 6, characterised in that the push-in region (A) at the insertion end (3) can be defined in the course of a circumferential cut which is made in the outer layer (7) as far as the separating film layer (5), wherein the circumferential cut is made at a distance from the pipe end (9) corresponding to the length (1) of the push-in region (A), and wherein a ring of outer layer (10) of length (1), which is formed by the circumferential cut, can be pulled off from the separating film layer (5) and thus from the insertion end (3).

## Revendications

1. Tube, en particulier tube enroulé, constitué de deux éléments de tube (1, 2) ou plus en matière thermoplastique, chaque élément de tube (1, 2) présentant à ses extrémités, d'une part une extrémité à enficher (3) et d'autre part une douille d'enfichage (4), et les éléments de tube (1, 2) étant à double paroi avec une couche de séparation (5) entre une couche de base (6) et une couche de couverture, caractérisé en ce que la couche de séparation (5) est faite d'une matière qui ne se lie pas par adhésion avec la couche de couverture (7), la couche de couverture (7), au moins dans la région d'une zone à enficher (A) côté extrémité d'enfichage, pouvant être séparée du reste de la couche de couverture (7).

2. Tube selon la revendication 1, caractérisé en ce que le couche de base (6) et la couche de couverture (7) sont fabriquées dans la même matière avec la même épaisseur de paroi (s).

3. Tube selon la revendication 1 ou 2, caractérisé en ce que la douille d'enfichage (4) présente un diamètre intérieur (Sᵢ) adapté au diamètre extérieur (Tₐ) de la couche de séparation (5).

4. Tube selon l'une des revendications 1 à 3, caractérisé en ce que la douille d'enfichage présente un bourrelet annulaire (8) d'un diamètre extérieur (Wₐ) qui est supérieur au diamètre extérieur (Dₐ) de la couche de couverture (7).

5. Tube selon l'une des revendications 1 à 4, caractérisé en ce que la douille d'enfichage (4) présente une zone d'enfichage (E) de longueur (I) donnée, et en ce que la zone à enficher à l'extrémité d'enfichage (3) peut être définie sur la même longueur (I).

6. Tube selon l'une des revendications 1 à 5, caractérisé en ce que la douille d'enfichage (4) est formée dans la couche de base (6) et en ce que la couche de couverture (7) est appliquée sur la couche de base (6), l'extrémité côté douille d'enfichage de la couche de couverture (7) étant jointive avec la douille d'enfichage (4) dépassante.

7. Tube selon l'une des revendications 1 à 6, caractérisé en ce que la zone à enficher (A) à l'extrémité d'enfichage (3) peut être définie au cours d'une coupe périphérique, à pratiquer dans la couche de couverture (7), jusqu'à la couche de séparation (5), la coupe périphérique étant réalisée à une distance de l'extrémité (9) du tube, qui correspond à la longueur (I) de la zone à enficher (A), et un anneau (10) de la couche de couverture et de longueur (I) qui se forme à la suite de la coupe périphérique, pouvant être enlevé de la couche de séparation (5) et donc de l'extrémité d'enfichage (3).
